# EUROPEAN PATENT SPECIFICATION

(11) **EP 3 902 295 B1**
(45) Date of publication and mention of the grant of the patent: **22.05.2024**
(21) Application number: 20759052.2
(22) Date of filing: 22.01.2020
(51) Int. Cl.: H04W 4/40, H04W 76/14

(54) **SCHEDULING METHOD FOR SIDELINK COMMUNICATION, TERMINAL DEVICE, AND NETWORK DEVICE**
VERFAHREN ZUR PLANUNG FÜR SIDELINK-KOMMUNIKATION, ENDGERÄTEVORRICHTUNG UND NETZWERKVORRICHTUNG
PROCÉDÉ DE PLANIFICATION POUR COMMUNICATION DE LIAISON LATÉRALE, DISPOSITIF TERMINAL, ET DISPOSITIF DE RÉSEAU

(30) Priority: 20.02.2019 CN 201910125431
(43) Date of publication of application: 27.10.2021
(73) Proprietor: Huawei Technologies Co., Ltd., Longgang Shenzhen, Guangdong 518129 (CN)
(72) Inventor: YUAN, Pu, Shenzhen, Guangdong 518129 (CN)
(74) Representative: Gill Jennings & Every LLP
(86) International application number: PCT/CN2020/073804
(87) International publication number: WO 2020/168900

(56) References cited:
- WO-A1-2018/174677
- CN-A- 108 260 163
- CN-A- 108 696 935
- US-A1- 2017 188 406
- US-A1- 2018 146 471
- NTT DOCOMO ET AL: "Sidelink resource allocation mechanism", 3GPP DRAFT; R1-1813320, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 16 November 2018 (2018-11-16), pages 1-9, XP051479630, Retrieved from the Internet: URL:http://www.3gpp.org/ftp/tsg%5Fran/WG1% 5FRL1/TSGR1%5F95/Docs/R1%2D1813320%2Ezip
- NTT DOCOMO, INC.: "Sidelink resource allocation mechanism", 3GPP TSG RAN WG1 Meeting #95 R1-1813320, 16 November 2018 (2018-11-16), XP051479630, DOI: 20200410110335X
- INTEL CORPORATION: "Summary for NR-V2X AI - 7.2.4.1.4 Resource Allocation Mechanism", 3GPP TSG RAN WG1 Meeting #95 R1-1813908, 16 November 2018 (2018-11-16), XP051494404, DOI: 20200410110419A

## Description

### TECHNICAL FIELD

This application relates to the field of communications technologies, and more specifically, to a scheduling method for sidelink communication, a terminal apparatus, and a network apparatus.

### BACKGROUND

Development of an intelligent transportation system (intelligent transportation system, ITS) promotes development of an internet of vehicles (Internet of vehicle, IoV) from a conventional internet of vehicles that supports only an in-vehicle information service to a next-generation internet of vehicles that supports a vehicle-to-everything (vehicle to everything, V2X) service. Applications of a V2X system include: vehicle-to-vehicle (vehicle to vehicle, V2V), vehicle-to-infrastructure (vehicle to infrastructure, V2I), vehicle-to-pedestrian (vehicle to pedestrian, V2P), vehicle-to-network (vehicle to network, V2N), and the like. The application of the V2X system improves driving safety, reduces congestion and vehicle energy consumption, improves traffic efficiency, provides in-vehicle entertainment information, and so on.

Communication performed between terminal apparatuses in the V2X system is widely referred to as sidelink (sidelink, SL) communication. Currently, technologies related to the V2X system in a new radio access technology (new radio access technology, NR) are LTE-V2X and NR. In a sidelink of LTE-V2X, resources used to send broadcast channels/signals are all configured by a network apparatus gNB by using downlink control information (downlink control information, DCI). In an NR system, an uplink resource of the terminal apparatus is configured by using DCI of NR.

For example, in a 5th generation new radio (5th generation new radio, 5G NR) system, a gNB serves as a central control unit of a cell, and may schedule a terminal apparatus located in the cell and undertake all scheduling functions. However, when a quantity of terminal apparatuses that need to be scheduled by the gNB is excessively large, workload of performing the scheduling function by the gNB is excessively heavy. In addition, in a 5G internet of vehicles NR-V2X system, terminal apparatuses are classified into two types: an in-coverage (in-coverage, IC) terminal apparatus and an out-of-coverage (out-of-coverage, OOC) terminal apparatus. The in-coverage terminal apparatus is located in an area covered by the gNB. Therefore, the in-coverage terminal apparatus may establish a connection to the gNB and be directly scheduled by the gNB. Different from the in-coverage terminal apparatus, the out-of-coverage terminal apparatus is located out of the area covered by the gNB, cannot directly establish a connection to the gNB, and consequently cannot be directly scheduled by the gNB. In this case, an autonomous scheduling method performed by the terminal apparatus may be used. To be specific, the terminal apparatus schedules sidelink transmission of another terminal apparatus.

How to reduce the workload of performing the scheduling function by the network apparatus and flexibly schedule terminal apparatuses located at different geographical locations becomes a problem to be urgently resolved.

NTT DOCOMO ET AL: "Sidelink resource allocation mechanism", 3GPP DRAFT; R1-1813320, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 16 November 2018 relates to sidelink resource allocation mechanism.

### SUMMARY

Implementations of this application provide a scheduling method for sidelink communication, a terminal apparatus, and a network apparatus, to resolve a problem that when a quantity of terminal apparatuses that need to be scheduled is excessively large, workload of performing a scheduling function by the network apparatus is excessively heavy.

The invention has been defined in the independent claims. Further specific technical features have been defined in the dependent claims.

According to the scheduling method in this implementation, the first terminal apparatus is determined to serve as the scheduling terminal apparatus, so that the first terminal apparatus can perform a scheduling function similar to that of a network apparatus, and schedule sidelink transmission of the at least one second terminal apparatus. A terminal apparatus schedules another terminal apparatus, so as to share workload of scheduling performed by the network apparatus, reduce workload of performing the scheduling function by the network apparatus, and avoid a problem that when a quantity of terminal apparatuses that need to be scheduled is excessively large, the workload of performing the scheduling function by the network apparatus is excessively heavy. In addition, terminal apparatuses at different locations are selected to serve as scheduling terminal apparatuses, so that a terminal apparatus that cannot receive scheduling information of the network apparatus can be scheduled. For example, for a terminal apparatus that is located out of a coverage area of the network apparatus and that cannot receive the scheduling information sent by the network apparatus, a first terminal apparatus that can establish a connection to the terminal apparatus may be selected to serve as a scheduling terminal apparatus, so as to schedule sidelink transmission of the first terminal apparatus.

It should be understood that the first terminal apparatus may be located in the coverage area of the network apparatus, or may be located out of the coverage area of the network apparatus, and the first terminal apparatus can schedule the at least one second terminal apparatus. Correspondingly, the scheduling information in this implementation of this application may be resource configuration information used for sidelink transmission for communication between the terminal apparatuses.

Communication manners in this implementation may be unicast, multicast, and broadcast.

According to the scheduling method in this implementation of this application, the network apparatus assists in selecting a terminal apparatus to serve as a scheduler to schedule another terminal apparatus, so as to resolve a problem that when a quantity of terminal apparatuses that need to be scheduled is excessively large, workload of performing a scheduling function by the network apparatus is excessively heavy. Terminal apparatuses located at different geographical locations can be flexibly scheduled.

According to the scheduling method in certain implementations of this application, the first terminal may learn of information about the second terminal apparatus and/or the quantity of second terminal apparatuses by sending the pilot signal and receiving the feedback information of the second terminal apparatus.

According to the scheduling method in certain implementations of this application, a limitation condition for sending the application information by the first terminal apparatus to the network apparatus is set, so as to avoid a case in which excessively large quantity of terminal apparatuses that receive a quantity, of pieces of feedback information of the second terminal apparatus, less than the preset threshold send application information to the network apparatus, consequently causing the network apparatus to process excessive pieces of application information, and reducing efficiency of assisting in selecting the scheduling terminal apparatus.

According to the scheduling method in certain implementations of this application, the first terminal apparatus receives the feedback information sent by the second terminal apparatus for the pilot signal, so that the first terminal apparatus can obtain information about the second terminal apparatus and a quantity of second terminal apparatuses that support the first terminal apparatus to be the scheduling terminal apparatus, and whether the first terminal apparatus can be the scheduling terminal apparatus is further determined. That is, the scheduling terminal apparatus can be selected by election of other terminal apparatuses.

According to the scheduling method in certain implementations of this application, a scheduling terminal apparatus that can schedule a relatively large quantity of second terminal apparatuses can be selected, and a relatively small quantity of scheduling apparatuses can be used to schedule a plurality of second terminal apparatuses in a subsequent scheduling process.

According to the scheduling method in certain implementations of this application, the scheduling terminal apparatus may schedule the second terminal apparatus that sends the feedback information to the scheduling terminal apparatus, that is, specifically, schedule a second terminal apparatus that can establish signaling interaction with the scheduling terminal apparatus, so as to ensure that stable channel quality or stable signal quality exists between the scheduling terminal apparatus and a scheduled terminal apparatus.

According to the scheduling method in certain implementations of this application, the first terminal apparatus performs a scheduling function to schedule sidelink transmission of another terminal apparatus, so as to schedule terminal apparatuses at different geographical locations, and in particular, schedule a terminal apparatus located out of the coverage area of the network apparatus, thereby improving flexibility of scheduling performed on the terminal apparatus.

According to the scheduling method in certain implementations of this application, the network apparatus receives the application information of the first terminal apparatus, and assists in selecting the scheduling terminal apparatus, so that the network apparatus can select, based on information related to the first terminal apparatus in the application information, a scheduling terminal apparatus that meets a scheduling terminal apparatus capability, thereby efficiently selecting a scheduling terminal apparatus that meets a scheduling requirement.

According to the scheduling method in certain implementations of this application, the network apparatus may select, based on the quantities of second terminal apparatuses in the application information sent by the first terminal apparatus, a first terminal apparatus that can schedule a relatively large quantity of second terminal apparatuses to serve as the scheduling terminal apparatus.

According to the scheduling method in certain implementations of this application, the network apparatus assists in selecting the scheduling terminal apparatus, so that the terminal apparatus can perform a scheduling function, and schedule sidelink transmission of another terminal apparatus. In particular, for the terminal apparatus located out of the coverage area of the network apparatus, a problem that a resource configuration of the sidelink transmission cannot be implemented because the terminal apparatus cannot receive scheduling information of the network apparatus is resolved.

According to the scheduling method for sidelink communication, the terminal apparatus, and the network apparatus in the implementations of this application, the terminal apparatus is selected to serve as the scheduling terminal apparatus and schedule another terminal apparatus, so as to reduce workload of the network apparatus, and improve efficiency and flexibility of scheduling performed on terminal devices located at different geographical locations.

### BRIEF DESCRIPTION OF DRAWINGS

FIG. 1 is a schematic diagram of a coverage state of a terminal apparatus in a V2X communications scenario;
FIG. 2 is a schematic flowchart of a scheduling method according to a claimed embodiment of this application;
FIG. 3 is a schematic flowchart of a scheduling method according to a claimed embodiment of this application;
FIG. 4 is a schematic flowchart of a scheduling method according to a claimed embodiment of this application;
FIG. 5 is a schematic flowchart of a scheduling method according to still another implementation of this application;
FIG. 6 is a schematic flowchart of a scheduling method according to still another implementation of this application;
FIG. 7 is a schematic structural diagram of a terminal apparatus according to an implementation of this application;
FIG. 8 is a schematic structural diagram of a network apparatus according to another implementation of this application; and
FIG. 9 is a schematic structural diagram of a communications apparatus according to another implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim.

With continuous development of the society, popularity of vehicles has soared. The vehicle brings convenience to people in traveling, and has some negative impact on human society. A rapid increase in a quantity of vehicles causes a series of problems such as urban traffic congestion, frequent traffic accidents, and worse environment quality. Currently, a vehicle may obtain road condition information or receive service information in time in a V2V, V2I, V2P, or V2N communications manner. The communications manners may be collectively referred to as V2X communication.

Vehicles communicate with each other through V2V communication. A vehicle may broadcast information such as a vehicle speed, a driving direction, a specific location, and whether an emergency brake is pressed to a surrounding vehicle. A driver of the surrounding vehicle can better learn of a traffic status outside a line of sight by obtaining the information, and therefore, can predict and avoid a risk status in advance. V2I communication is performed between the vehicle and a roadside infrastructure, and the roadside infrastructure can provide various service information and data network access for the vehicle. Functions such as electronic toll collection and in-vehicle entertainment greatly improve traffic intelligence. V2P communication is performed between a vehicle and a person (for example, a vehicle and a pedestrian, a vehicle and a cyclist, a vehicle and a driver, or a vehicle and a passenger). V2N communication is performed between a vehicle and a network, and V2N and the foregoing V2I may be collectively referred to as V2I/N.

An NR technology is a current mainstream wireless communications technology. For a V2X service feature and a new service requirement, the NR technology makes various improvements, and can support V2X communication with a lower latency and higher reliability. For an NR-V2X communications system, two types of air interfaces are defined: a Uu interface and a PCS interface. For the Uu interface, the 3GPP standardization organization defines a communications protocol similar to that between a terminal apparatus and a network apparatus in NR, that is, uplink and downlink transmission protocols between the terminal apparatus and the network apparatus. Specifically, the transmission protocol basically inherits the uplink and downlink transmission protocols of NR in terms of frequency band allocation, bandwidth, frame structures, transmission modes, and signaling definitions, and adds some V2X-dedicated signaling on this basis. For the PCS interface, the 3GPP standardization organization defines a communications protocol between the terminal apparatuses. The communications protocol is designed differently for the foregoing aspects. For example, in terms of a frequency band, the PCS interface communications protocol may not only consider multiplexing an NR uplink frequency band, but also may use an unlicensed frequency band. In addition, the PCS interface in the NR-V2X system uses a dedicated frame structure and a dedicated pilot design, to simplify beam management and multiple-input multiple-output (multiple-input multiple-output, MIMO) based on NR.

The implementations of this application are applicable to communications scenarios such as unmanned driving, autonomous driving, network-connected driving, an internet of vehicles, an intelligent vehicle, an unmanned vehicle, a pure electric vehicle, a hybrid electric vehicle, and a new energy vehicle.

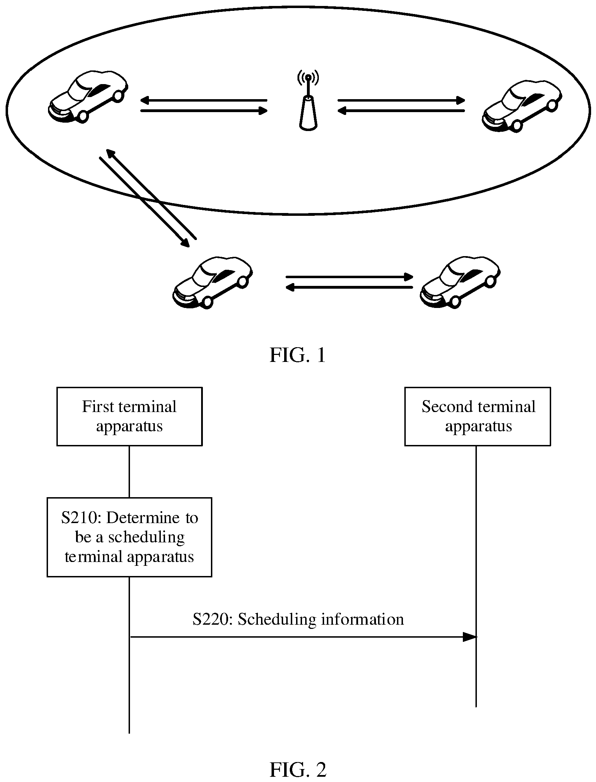

FIG. 1 is a schematic diagram of a coverage state of a terminal apparatus in a V2X communications system.

The V2X communications system in FIG. 1 includes a network apparatus and terminal apparatuses. The network apparatus is a central control unit of a cell, and may undertake a function of scheduling the terminal apparatuses in the cell. The network apparatus may be configured to schedule and allocate a resource for transmission of the terminal apparatus. It may be understood that, in communications systems using different radio access technologies, a device that has a network apparatus function may have different names. The network apparatus may be, for example, an evolved NodeB (evolved nodeB, eNB) in long term evolution (long term evolution, LTE), or may be a RAN node (RAN node) in 5G. The network apparatus may be a macro base station, or may be a micro base station. Alternatively, the network apparatus may be a drive test device or terminal apparatus that has a scheduling function. In implementations of this application, for ease of description, devices that can implement the scheduling function related to the network apparatus are collectively referred to as network apparatuses. There may be one or more cells in a coverage area of one network apparatus.

The terminal apparatus may communicate with one or more core networks (core network, CN) through the network apparatus. Sometimes, the terminal apparatus may also be referred to as an access terminal, a terminal, user equipment, a subscriber unit, a subscriber station, a mobile station, a mobile console, a remote station, a remote terminal, a mobile device, a user terminal, a wireless network device, a user agent, or a user apparatus. The terminal apparatus may be a vehicle user (vehicle user equipment, VUE) that performs communication according to an NR-V2X standard. The terminal apparatus may alternatively be a cellular phone, a cordless phone, a session initiation protocol (session initiation protocol, SIP) phone, a wireless local loop (wireless local loop, WLL) station, a computing device, another device connected to a wireless modem, a vehicle-mounted device, a wearable device, a terminal device in an internet of things or an internet of vehicles, any forms of terminal device in a future network, and the like.

There may be one or more terminal apparatuses. Based on different geographical locations, the terminal apparatuses may be classified into a terminal apparatus located in the coverage area of the network apparatus and a terminal apparatus located out of the coverage area of the network apparatus. The terminal apparatus located in the coverage area of the network apparatus is also located in the cell corresponding to the network apparatus, and the terminal apparatus may establish a connection to the network apparatus to perform signaling interaction. The terminal apparatus located out of the coverage area of the network apparatus includes an out-of-coverage terminal apparatus that cannot be connected to the network apparatus and cannot establish a connection to another terminal apparatus located in the coverage area of the network apparatus, or may include a terminal apparatus that cannot establish the connection to the network apparatus, but can establish a connection to a part of terminal apparatuses in the coverage area of the network apparatus. The terminal apparatus that establishes the connection to the network apparatus may receive scheduling information sent by the network apparatus, and the network apparatus schedules sidelink transmission. In addition, there may be another manner for scheduling the terminal apparatus. For example, to schedule the terminal apparatus, one or more terminal apparatuses may be selected to serve as schedulers to perform the scheduling function similar to that performed by the network apparatus. A terminal apparatus is used to schedule another terminal apparatus, so as to resolve a problem that when a quantity of terminal apparatuses that need to be scheduled is excessively large, workload of performing the scheduling function by the network apparatus is excessively heavy. In this way, a terminal apparatus that cannot receive the scheduling information sent by the network apparatus can be scheduled. For example, for a terminal apparatus that is located out of the coverage area of the network apparatus and that cannot receive the scheduling information sent by the network apparatus, a resource configuration for sidelink transmission can be implemented by receiving scheduling information sent by a scheduling terminal apparatus.

FIG. 2 is a schematic diagram of a scheduling method according to an implementation of this application. The scheduling method in FIG. 2 may be performed by a first terminal apparatus. The first terminal apparatus may be, for example, the terminal apparatus 110 shown in FIG. 1. The method may include step S210 and step S220.

In step S210, the first terminal apparatus determines to be a scheduling terminal apparatus of a second terminal apparatus.

The first terminal apparatus or the second terminal apparatus may be located in a coverage area of a network apparatus, or may be located out of the coverage area of the network apparatus. In other words, the first terminal apparatus may be IC UE, or may be OOC UE. The IC UE may establish an RRC connection to the network apparatus.

Serving as the scheduling terminal apparatus, the first terminal apparatus may have a stronger capability than a common terminal apparatus. A capability of a terminal apparatus may be one or more of a hardware capability (for example, may be one or more of a maximum transmission power, a quantity of antennas, and a maximum supported bandwidth), communications load, a channel condition, and stationarity of the terminal apparatus. For example, compared with a scheduled terminal apparatus, the scheduling terminal apparatus may have a stronger hardware capability. For another example, a communications requirement and a communications task of the scheduling terminal apparatus do not affect each other. For another example, channel quality of the scheduling terminal apparatus is good. For another example, the scheduling terminal apparatus has good stationarity. For example, communications load and channel quality of the scheduling terminal apparatus do not frequently change greatly.

Step 210 may be implemented in a plurality of manners. For example, the first terminal apparatus may apply, to the network apparatus, to be the scheduling terminal apparatus of the second terminal apparatus. For another example, the first terminal apparatus may become the scheduling terminal apparatus of the second terminal apparatus through election among terminal apparatuses. The following provides detailed descriptions with reference to specific implementations, and details are not described herein.

In step S220, the first terminal apparatus sends scheduling information to the second terminal apparatus.

Optionally, the first terminal apparatus is a scheduling terminal apparatus that can schedule another terminal apparatus, and can perform a scheduling function similar to that of the network apparatus, to schedule sidelink transmission of the another terminal apparatus.

Optionally, the first terminal apparatus may send the scheduling information to the second terminal device by using a first sidelink resource. The first sidelink resource may belong to a common resource configured by the network apparatus for the first terminal apparatus by using a system information block (system information block, SIB) or radio resource control (radio resource control, RRC). Alternatively, the first sidelink resource may belong to a preconfigured common resource, and the preconfigured common resource may be, for example, a common resource preconfigured by the network apparatus. The common resource may be a common bandwidth part (band width part, BWP) or a common resource pool (resource pool, RP).

Optionally, the second terminal apparatus may be a terminal apparatus located in the coverage area of the network apparatus, or may be a terminal apparatus located out of the coverage area of the network apparatus. The terminal apparatus located in the coverage area of the network apparatus may establish an RRC connection to the network apparatus. The terminal apparatus located out of the coverage area of the network apparatus may establish a connection to the terminal apparatus located in the coverage area of the network device, or may fail to establish a connection to the terminal apparatus located in the coverage area of the network device.

Optionally, the scheduling information sent by the first terminal apparatus may be used to determine a resource of the another terminal apparatus during sidelink transmission. The scheduling information sent by the first terminal apparatus to the second terminal apparatus may be configured based on a quality of service (quality of service, QoS) requirement of a service of the second terminal apparatus.

According to the scheduling method provided in this implementation, a terminal apparatus is selected to serve as a scheduler to perform a scheduling function on another terminal apparatus, so that the terminal apparatus can schedule sidelink transmission of the terminal apparatus, thereby reducing workload of scheduling performed by the network apparatus, and implementing sidelink transmission scheduling performed on terminal apparatuses at different geographical locations.

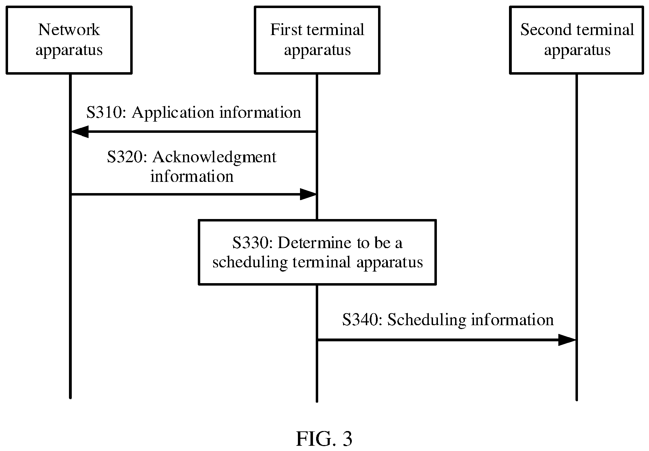

The scheduling method provided in this application is described below by using an example with reference to FIG. 3.

FIG. 3 is a schematic flowchart of a scheduling method according to an implementation of this application. FIG. 3 may include step S310 to step S340.

In step S310, a first terminal apparatus sends application information to a network apparatus.

Optionally, the first terminal apparatus may be a candidate scheduling terminal apparatus located in a cell covered by the network apparatus. The candidate scheduling terminal apparatus may apply, to the network apparatus, to be a scheduling terminal apparatus, so as to schedule sidelink transmission of a second terminal apparatus. There may be one or more candidate scheduling terminal apparatuses that apply, to the network apparatus, to be scheduling terminal apparatuses.

Optionally, before applying, to the network apparatus, to be the scheduling terminal apparatus, the first terminal apparatus first collects information about a second terminal apparatus around the first terminal apparatus.

Optionally, the information about the second terminal apparatus may include a quantity of second terminal apparatuses or information related to the second terminal apparatus, for example, one or more of a type, a geographical location, or channel quality of the second terminal apparatus.

Optionally, there may be a plurality of methods for the first terminal apparatus to collect the information about the second terminal apparatus. For example, the first terminal apparatus sends a pilot signal to another terminal apparatus, a second terminal apparatus that receives the pilot signal sends feedback information to the first terminal apparatus, and the first terminal apparatus obtains information about the second terminal apparatus based on the feedback information. The information obtained by the first terminal apparatus may be a quantity of second terminal apparatuses or information related to the second terminal apparatus, for example, may be one or more of a type, a geographical location, or channel quality of the second terminal apparatus. The another terminal apparatus may be at least one terminal apparatus around the first terminal apparatus, and the second terminal apparatus that receives the pilot signal belongs to one or more of other terminal apparatuses.

Optionally, the pilot signal sent by the first terminal apparatus may be a sidelink synchronization signal, or may be another signal.

Optionally, the first terminal apparatus sends the application information to the network apparatus, where the application information is used to indicate the first terminal apparatus to apply, to the network apparatus, to be the scheduling terminal apparatus.

Optionally, the application message may include information related to the first terminal apparatus. The information related to the first terminal apparatus may be, for example, one or more of a hardware capability (for example, may be one or more of a maximum transmission power, a quantity of antennas, and a maximum supported bandwidth), communications load, a channel condition, and stationarity of the terminal apparatus.

Optionally, the application information may include the quantity of second terminal apparatuses or the information related to the second terminal apparatus. The information related to the second terminal may be, for example, a type, a geographical location, and channel quality of the second terminal apparatus.

Optionally, the information that is related to the second terminal apparatus and that is included in the application message may be obtained by the first terminal apparatus from the received feedback information sent by the second terminal apparatus.

Optionally, the first terminal apparatus may send the application information to the network apparatus only when the first terminal apparatus meets a preset condition. For example, the preset condition may be that a quantity of received feedback signals reaches a preset threshold, or a quantity of second terminal apparatuses that send the feedback information to the first terminal apparatus reaches the preset threshold.

Optionally, the preset threshold may be set by the network apparatus.

For example, the preset threshold is T. When the quantity of pieces of feedback information received by the first terminal apparatus reaches T, the network apparatus allows the first terminal apparatus to send the application information to the network apparatus, so as to apply to be the scheduling terminal apparatus. Alternatively, in a process in which the first terminal apparatus collects the information about the second terminal, when the quantity of second terminal apparatuses that send the feedback information to the first terminal apparatus reaches T, the network apparatus allows the first terminal apparatus to send the application information to the network apparatus, so as to apply to be the scheduling terminal apparatus. By setting a condition for sending the application information by the first terminal apparatus, the network apparatus can avoid receiving and processing excessive pieces of application information, thereby improving efficiency of assisting in selecting the scheduling terminal apparatus by the network apparatus.

Optionally, after receiving the application information of the first terminal apparatus, the network apparatus may determine one or more first terminal apparatuses to be scheduling terminal apparatuses. There may be a plurality of methods for the network apparatus to determine the scheduling terminal apparatus.

In an example, when a plurality of first terminal apparatuses apply, to the network apparatus, to be scheduling terminal apparatuses, the network apparatus determines whether coverage areas of the plurality of first terminal apparatuses overlap. When the coverage areas of the plurality of first terminal apparatuses overlap, the network apparatus may select a scheduling terminal apparatus based on quantities of second terminal apparatuses in application information sent by the plurality of first terminal apparatuses. For example, the network apparatus may select, to be the scheduling terminal apparatus, a first terminal apparatus that sends application information in which a quantity of second terminal apparatuses is the largest. Alternatively, the network apparatus may compare, in a group of first terminal apparatuses whose coverage areas overlap, quantities of second terminal apparatuses in application information sent by the first terminal apparatuses, and select, in the group to be the scheduling terminal apparatus, a first terminal apparatus that sends application information in which a quantity of second terminal apparatuses is the largest.

In another implementation, when at least one first terminal apparatus applies, to the network apparatus, to be the scheduling terminal apparatus, and a coverage area of the at least one first terminal apparatus does not overlap, the network apparatus may select the at least one first terminal apparatus to be the scheduling terminal apparatus.

According to the method for selecting the scheduling terminal device in the foregoing implementation, the network apparatus may select a scheduling terminal apparatus whose coverage area does not overlap and that can schedule a relatively large quantity of second terminal apparatuses, so as to avoid a resource waste problem caused by scheduling a same second terminal apparatus by a plurality of scheduling terminal apparatuses.

After step S310, FIG. 3 further includes step S320: The network apparatus sends acknowledgment information to the first terminal apparatus.

The network apparatus determines the first terminal apparatus to be the scheduling terminal apparatus. The network apparatus sends the acknowledgment information to the first terminal apparatus, so that the first terminal apparatus learns that the first terminal apparatus is a scheduler.

The acknowledgment information sent by the network apparatus to the first terminal apparatus may include an indication message, and the indication message indicates a second terminal apparatus that can be scheduled by the first terminal apparatus. In other words, the network apparatus indicates which second terminal apparatuses can be scheduled by the first terminal apparatus after the first terminal apparatus serves as the scheduling terminal apparatus. The second terminal apparatus that can be scheduled by the first terminal apparatus may be a second terminal apparatus that sends feedback information to the first terminal apparatus, or may be another terminal apparatus located around the first terminal apparatus.

Optionally, after receiving the acknowledgment information sent by the network apparatus, the first terminal apparatus determines to be the scheduling terminal apparatus and schedules the second terminal apparatus.

Step S330 and step S340 in FIG. 3 are respectively similar to step S210 and step S220 in FIG. 2. To avoid repetition, details are not described herein again.

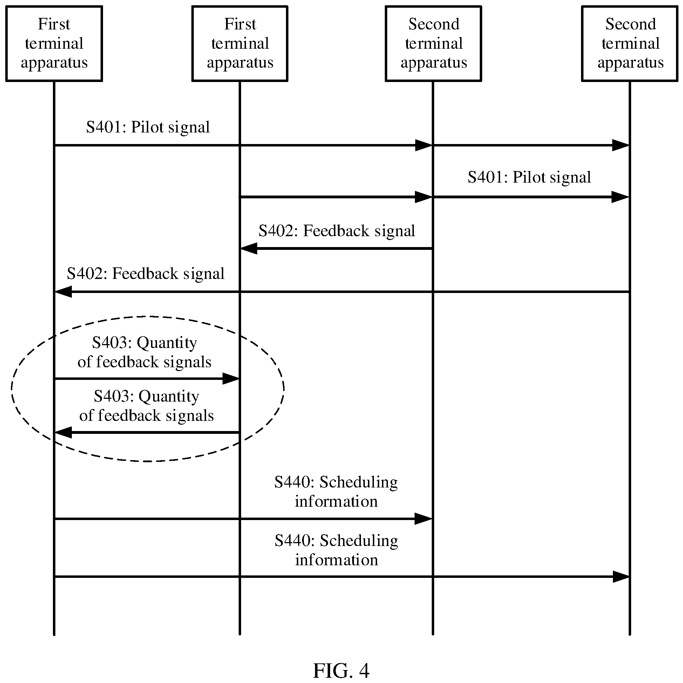

FIG. 4 is a schematic flowchart of a scheduling method according to another implementation of this application. FIG. 4 includes steps S401 to S440.

In step S401, a first terminal apparatus sends a pilot signal.

Optionally, the first terminal apparatus is a candidate terminal apparatus that applies to be a scheduling terminal apparatus, and there may be a plurality of first terminal apparatuses. The first terminal apparatus may be IC UE, or may be OOC UE.

Optionally, the first terminal apparatus sends the pilot signal to another terminal apparatus located around the first terminal apparatus. A terminal apparatus that receives the pilot signal is a second terminal apparatus, and the second terminal apparatus is one or more of other terminal apparatuses located around the first terminal apparatus. The second terminal apparatus may be IC UE, or may be OOC UE, and the second terminal apparatus may receive scheduling information sent by the scheduling terminal apparatus.

Optionally, the pilot signal sent by the first terminal apparatus may be a sidelink synchronization signal, or may be another signal. The pilot signal is used to enable the another terminal apparatus to learn that the first terminal apparatus is a candidate scheduling terminal apparatus.

In step S402, the first terminal apparatus receives feedback information sent by at least one second terminal apparatus.

Optionally, the at least one second terminal apparatus is a terminal apparatus that receives the pilot signal sent by the first terminal apparatus. The at least one second terminal apparatus sends the feedback information to the first terminal apparatus for the pilot signal. The second terminal apparatus may determine, based on the pilot signal, a first terminal apparatus to which the feedback information is sent. For example, the second terminal apparatus may learn of channel quality, signal quality, and the like between the second terminal apparatus and the first terminal apparatus based on the pilot signal. The second terminal apparatus may send the feedback signal to a first terminal apparatus with good channel quality.

Optionally, the feedback signal sent by the second terminal apparatus carries information related to the second terminal apparatus, and the related information may be, for example, one or more of a type, a geographical location, or channel quality of the second terminal apparatus.

Optionally, the feedback information sent by the second terminal apparatus to the first terminal apparatus may be a broadcast message. The broadcast message includes priority information of a candidate scheduling terminal apparatus supported by the second terminal apparatus, and the priority information indicates a first terminal apparatus that the second terminal apparatus is most likely to select to be the scheduling terminal apparatus. In other words, the candidate scheduling terminal apparatus may learn, based on the priority information in the broadcast message, of a candidate scheduling terminal apparatus that is supported by the largest quantity of second terminal apparatuses, and may further determine the candidate scheduling terminal apparatus supported by the largest quantity of second terminal apparatuses as the scheduling terminal apparatus.

In step S403, the first terminal apparatus broadcasts a quantity of pieces of received feedback information.

Optionally, at least one first terminal apparatus serving as the candidate scheduling terminal apparatus sends a broadcast message, where the broadcast message includes the quantity of pieces of received feedback information.

Optionally, a plurality of candidate scheduling terminal apparatuses may determine the scheduling terminal apparatus based on quantities of pieces of feedback information in broadcast messages sent by the plurality of first terminal apparatuses. There may be a plurality of methods for determining the scheduling terminal apparatus.

In an example, a first terminal apparatus may obtain, based on a broadcast message, a quantity of feedback signals received by another first terminal apparatus, where a first terminal apparatus that receives the largest quantity of feedback signals is the scheduling terminal apparatus.

In another example, a first terminal apparatus may determine, based on the priority information broadcast by the second terminal apparatus, a first terminal apparatus serving as the scheduling terminal apparatus. For example, the first terminal apparatus may determine, based on priority information in a broadcast message sent by one or more second terminal apparatuses, a first terminal apparatus supported by the largest quantity of second terminal apparatuses. In this case, the terminal apparatus is the scheduling terminal apparatus. It may be understood that different weights may be assigned to different pieces of priority information, and the scheduling terminal apparatus may be determined based on a calculated weight result. For example, there are currently two candidate scheduling terminal apparatuses, and both the two candidate scheduling terminal apparatuses receive three broadcast messages sent by different second terminal apparatuses, where weight information in priority information in the broadcast messages received by the first candidate scheduling terminal apparatuses is [3 3 2], and weight information in priority information of the broadcast messages received by the second candidate scheduling terminal apparatuses is [1 1 3]. In this case, a weight result of supporting the first candidate scheduling terminal apparatus to be the scheduling terminal apparatus is 3+3+2=8, and similarly, a weight result of supporting the second candidate scheduling terminal apparatus to be the scheduling terminal apparatus is 1+1+3=5. Because the weight result of the first candidate scheduling terminal apparatus is greater than the weight result of the second candidate scheduling terminal apparatus, the first candidate scheduling terminal apparatus obtains a higher priority, that is, the second terminal apparatus tends to select the first candidate scheduling terminal apparatus to be the scheduling terminal apparatus. In other words, the priority information in the broadcast message may be understood as a weight, but the priority information in this application is not limited thereto.

In step S440, the first terminal apparatus serving as the scheduling terminal apparatus sends scheduling information to the at least one second terminal apparatus.

Step S440 in FIG. 4 is similar to S220 in FIG. 2. To avoid repetition, details are not described herein again.

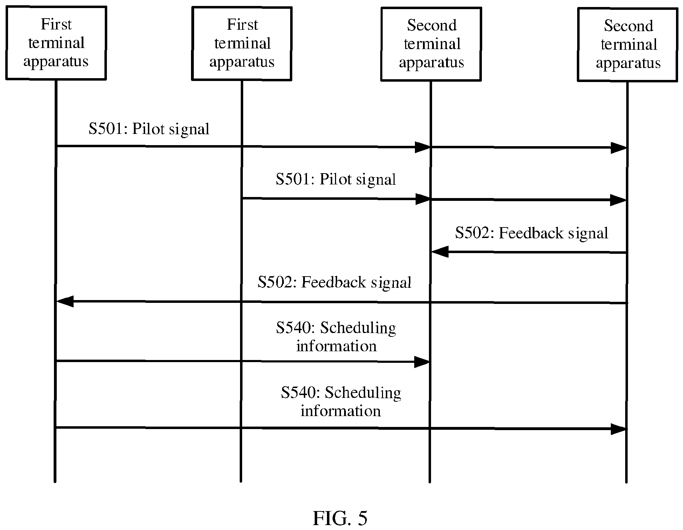

FIG. 5 is a schematic flowchart of a scheduling method according to another implementation of this application. FIG. 5 includes steps S501 to S540.

Step 501: A first terminal apparatus sends a pilot signal.

Optionally, the first terminal apparatus is a candidate terminal apparatus that applies to be a scheduling terminal apparatus, and there may be a plurality of first terminal apparatuses. The first terminal apparatus may be IC UE, or may be OOC UE.

Optionally, the first terminal apparatus sends the pilot signal to another terminal apparatus located around the first terminal apparatus. A terminal apparatus that receives the pilot signal is a second terminal apparatus, and the second terminal apparatus is one or more of other terminal apparatuses located around the first terminal apparatus. The second terminal apparatus may be IC UE, or may be OOC UE, and the second terminal apparatus may receive scheduling information sent by the scheduling terminal apparatus.

Optionally, the pilot signal sent by the first terminal apparatus may be a sidelink synchronization signal, or may be another signal. The pilot signal is used to enable the another terminal apparatus to learn that the first terminal apparatus is a candidate scheduling terminal apparatus.

In step S502, the first terminal apparatus receives a feedback signal sent by at least one second terminal apparatus.

Optionally, at least one first terminal apparatus receives the feedback signal sent by the at least one second terminal apparatus for the pilot signal. The second terminal apparatus determines, based on the pilot signal, a first terminal apparatus to which the feedback signal is sent. For example, the second terminal apparatus may obtain channel quality, signal quality, and the like between the second terminal apparatus and the first terminal apparatus based on the pilot signal. The second terminal apparatus may send the feedback signal to a first terminal apparatus with good channel quality.

Optionally, the feedback signal sent by the second terminal apparatus carries information related to the second terminal apparatus, and the related information may be, for example, one or more of a type, a geographical location, or channel quality of the second terminal apparatus.

Optionally, the feedback information sent by the second terminal apparatus to the first terminal apparatus may be a broadcast message. The broadcast message includes priority information of a candidate scheduling terminal apparatus supported by the second terminal apparatus, and the priority information indicates a first terminal apparatus that the second terminal apparatus is most likely to select to be the scheduling terminal apparatus. In other words, the candidate scheduling terminal apparatus may learn, based on the priority information in the broadcast message, of a candidate scheduling terminal apparatus that is supported by the largest quantity of second terminal apparatuses, and may further determine the candidate scheduling terminal apparatus supported by the largest quantity of second terminal apparatuses as the scheduling terminal apparatus.

Step S540: The first terminal apparatus serving as the scheduling terminal apparatus sends scheduling information to the second terminal apparatus.

Optionally, all first terminal apparatuses that receive the feedback signal sent by the second terminal apparatus may be scheduling terminal apparatuses, and there may be a plurality of scheduling terminal apparatuses.

The scheduling terminal apparatus sends scheduling information to a specific second terminal apparatus, and the specific second terminal apparatus may be a second terminal apparatus that sends the feedback signal to the scheduling terminal apparatus. In other words, the scheduling terminal apparatus schedules a sender (that is, the second terminal apparatus that sends the feedback information) corresponding to the received feedback information.

The scheduling terminal apparatus may send the scheduling information to the second terminal device by using a first sidelink resource. The first sidelink resource may belong to a common resource configured by a network apparatus for the first terminal apparatus by using a system information block (system information block, SIB) or radio resource control (radio resource control, RRC). Alternatively, the first sidelink resource may belong to a preconfigured common resource, for example, a common resource preconfigured by the network apparatus. The common resource may be a common bandwidth part (band width part, BWP) or a common resource pool (resource pool, RP).

Optionally, the scheduling information sent by the first terminal apparatus may be used to determine a resource of the another terminal apparatus during sidelink transmission. The scheduling information sent by the first terminal apparatus to the second terminal apparatus may be configured based on a quality of service (quality of service, QoS) requirement of a service of the second terminal apparatus.

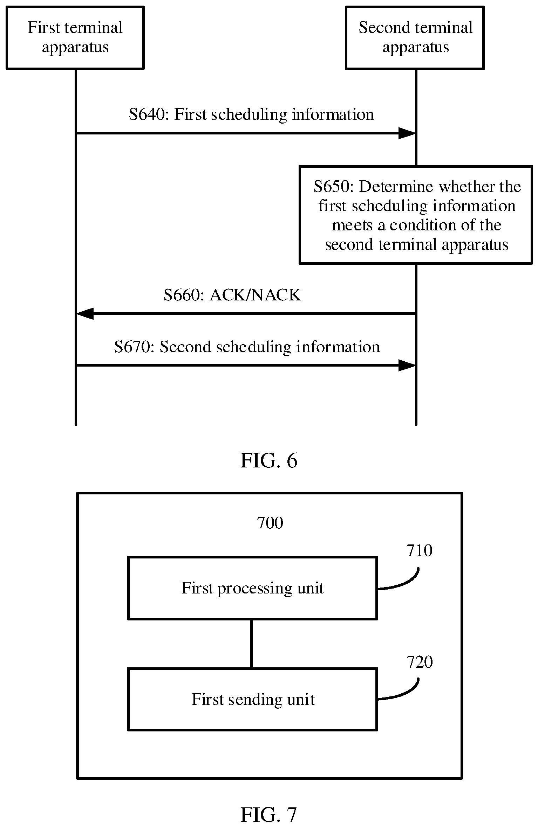

FIG. 6 is a schematic flowchart of a scheduling method. FIG. 6 includes steps S640 to S670.

Step S640: A first terminal apparatus sends first scheduling information to a second terminal apparatus.

Optionally, the first terminal apparatus is a scheduling terminal apparatus, and the second terminal apparatus is a scheduled terminal apparatus. The first terminal apparatus may be a receiving terminal apparatus, and the first terminal apparatus may be IC UE, or may be OOC UE. The second terminal apparatus may be a sending terminal apparatus, or the second terminal apparatus may be IC UE, or may be OOC UE.

Optionally, before the first terminal apparatus sends scheduling information to the second terminal apparatus, the second terminal apparatus sends a pilot signal. After receiving the pilot signal, the first terminal apparatus can learn of a current transmission mode or a future transmission configuration of the second terminal apparatus. The current transmission mode may be a time division duplex slot pattern (TDD slot pattern).

Optionally, the first terminal apparatus may further learn of channel quality between the first terminal apparatus and the second terminal apparatus based on the pilot signal of the second terminal apparatus.

It may be understood that the first scheduling information may be determined by the first terminal apparatus based on a transmission behavior of the first terminal apparatus, or may be determined by the first terminal apparatus based on the current transmission mode and/or the future transmission configuration of the second terminal apparatus, or configured by the first terminal apparatus based on a QoS requirement of a service of the second terminal apparatus.

Step S650: The second terminal apparatus determines whether the first scheduling information meets a condition of the second terminal apparatus.

It may be understood that after receiving the first scheduling information sent by the first terminal apparatus, the second terminal apparatus feeds back to the first terminal apparatus based on the condition of the second terminal apparatus. The condition of the second terminal apparatus may be a past sending experience or an expectation of a future sending requirement of the second terminal apparatus, for example, a channel condition on a specific time-frequency resource or whether congestion occurs.

Optionally, the second terminal apparatus may determine, based on whether resource configuration information, for sidelink transmission, included in the scheduling information meets the condition of the second terminal apparatus, to send an ACK or a NACK to the first terminal apparatus. For example, the second terminal apparatus may determine whether the resource configuration information meets a sidelink transmission requirement or another service requirement (for example, a QoS requirement) of the second terminal apparatus, and determine to send the ACK or the NACK to the first terminal apparatus.

Step S660: The second terminal apparatus sends the ACK/NACK to the first terminal apparatus.

It may be understood that when the first scheduling information meets the sidelink transmission requirement or the service requirement of the second terminal apparatus, the second terminal apparatus sends the ACK to the first terminal apparatus, to acknowledge that sidelink resource transmission can be performed based on the first scheduling information. After receiving the ACK, the first terminal apparatus ends a process of sending the first scheduling information. When the first scheduling information does not meet the sidelink transmission requirement or the service requirement of the second terminal apparatus, the second terminal apparatus sends the NACK to the first terminal apparatus.

Step S670: The first terminal apparatus sends second scheduling information to the second terminal apparatus.

After receiving the NACK, the first terminal apparatus sends the second scheduling information to the second terminal apparatus. It may be understood that the second scheduling information is different from the first scheduling information.

The foregoing describes in detail the method implementations of the implementations in this application with reference to FIG. 1 to FIG. 6. The following describes in detail apparatus implementations of the implementations in this application with reference to FIG. 7 to FIG. 9. It should be understood that, descriptions of the method implementations correspond to descriptions of the apparatus implementations. Therefore, for a part not described in detail, refer to the foregoing method implementations.

FIG. 7 is a schematic structural diagram of a terminal apparatus according to an implementation of this application. The terminal apparatus 700 in FIG. 7 may be the foregoing first terminal apparatus. The terminal apparatus 700 may be configured to implement the foregoing steps apparatus performed by the first terminal apparatus. The terminal apparatus 700 includes a first processing unit 710 and a first sending unit 720.

The first processing unit 710 is configured to determine the first terminal apparatus to be a scheduling terminal apparatus of at least one second terminal apparatus, where the scheduling terminal apparatus schedules sidelink transmission of the at least one second terminal apparatus.

The first sending unit 720 is configured to send scheduling information to the at least one second terminal apparatus, where the scheduling information is used for a sidelink resource configuration of the second terminal apparatus.

Optionally, the first sending unit 720 may send the scheduling information to the second terminal device by using a first sidelink resource. The first sidelink resource may belong to a common resource configured by a network apparatus for the first terminal apparatus by using an SIB or RRC. Alternatively, the first sidelink resource may belong to a preconfigured common resource, and the preconfigured common resource may be, for example, a common resource preconfigured by the network apparatus. The common resource may be a BWP or an RP.

Optionally, the scheduling information sent by the first sending unit 720 may be used to determine a resource of another terminal apparatus during sidelink transmission. The scheduling information sent by the first terminal apparatus to the second terminal apparatus may be configured based on a QoS requirement of the second terminal apparatus.

Optionally, the terminal apparatus 700 further includes a second sending unit, configured to send the application information to the network apparatus, where the application information is used to indicate the first terminal apparatus to apply, to the network apparatus, to be the scheduling terminal apparatus of the at least one second terminal apparatus.

Optionally, the application message may include information related to the first terminal apparatus. The information related to the first terminal apparatus may be, for example, one or more of a hardware capability (for example, may be one or more of a maximum transmission power, a quantity of antennas, and a maximum supported bandwidth), communications load, a channel condition, and stationarity of the terminal apparatus.

Optionally, the application information may include a quantity of second terminal apparatuses or information related to the second terminal apparatus. The information related to the second terminal may be, for example, a type, a geographical location, and channel quality of the second terminal apparatus.

Optionally, the terminal apparatus 700 further includes a first receiving unit, configured to receive acknowledgment information sent by the network apparatus. The network apparatus determines the first terminal apparatus to be the scheduling terminal apparatus. Optionally, the network apparatus sends the acknowledgment information to the first terminal apparatus, so that the first terminal apparatus learns that the first terminal apparatus is a scheduler.

Optionally, the acknowledgment information received by the first receiving unit may include an indication message, and the indication message indicates a second terminal apparatus that can be scheduled by the first terminal apparatus. In other words, the network apparatus indicates which second terminal apparatuses can be scheduled by the first terminal apparatus after the first terminal apparatus serves as the scheduling terminal apparatus. For example, the second terminal apparatus that can be scheduled by the first terminal apparatus may be a second terminal apparatus that sends feedback information to the first terminal apparatus, or may be another terminal apparatus located around the first terminal apparatus.

Optionally, the terminal apparatus 700 further includes a third sending unit, configured to send a pilot signal to another terminal apparatus. The second sending unit may send the pilot signal to another terminal apparatus located around the first terminal apparatus. A terminal apparatus that receives the pilot signal is a second terminal apparatus, and the second terminal apparatus is one or more of other terminal apparatuses located around the first terminal apparatus. The second terminal apparatus may be IC UE, or may be OOC UE, and the second terminal apparatus may receive scheduling information sent by the scheduling terminal apparatus.

Optionally, the pilot signal may be a sidelink synchronization signal, or may be another signal. The pilot signal is used to enable the another terminal apparatus to learn that the first terminal apparatus is a candidate scheduling terminal apparatus.

Optionally, the terminal apparatus 700 may further include a second receiving unit, configured to receive feedback information sent by the at least one second terminal apparatus.

Optionally, the at least one second terminal apparatus is a terminal apparatus that receives the pilot signal sent by the first terminal apparatus. The at least one second terminal apparatus sends the feedback information to the first terminal apparatus for the pilot signal. The second terminal apparatus may determine, based on the pilot signal, a first terminal apparatus to which the feedback information is sent. For example, the second terminal apparatus may learn of channel quality, signal quality, and the like between the second terminal apparatus and the first terminal apparatus based on the pilot signal. The second terminal apparatus may send the feedback signal to a first terminal apparatus with good channel quality.

Optionally, the feedback signal sent by the second terminal apparatus carries information related to the second terminal apparatus, and the related information may be, for example, one or more of a type, a geographical location, or channel quality of the second terminal apparatus.

Optionally, the feedback information sent by the second terminal apparatus to the first terminal apparatus may be a broadcast message. The broadcast message includes priority information of a candidate scheduling terminal apparatus supported by the second terminal apparatus, and the priority information indicates a first terminal apparatus that the second terminal apparatus is most likely to select to be the scheduling terminal apparatus. In other words, the candidate scheduling terminal apparatus may learn, based on the priority information in the broadcast message, of a candidate scheduling terminal apparatus that is supported by the largest quantity of second terminal apparatuses, and may further determine the candidate scheduling terminal apparatus supported by the largest quantity of second terminal apparatuses as the scheduling terminal apparatus.

Optionally, the terminal apparatus 700 may further include a second processing unit, configured to determine a quantity of second terminal apparatuses based on the feedback signal.

Optionally, the terminal apparatus 700 may further include a fourth sending unit, configured to send a broadcast message, where the broadcast message includes a quantity of pieces of feedback information received by the second receiving unit.

Optionally, the terminal apparatus 700 may further include a third receiving unit, configured to receive a broadcast message sent by another candidate scheduling terminal apparatus, where the broadcast message includes the quantity of pieces of feedback information received by the second receiving unit.

Optionally, the terminal apparatus 700 may further include a third processing unit, configured to determine the scheduling terminal apparatus based on a quantity of pieces of feedback information in broadcast messages sent by a plurality of first terminal apparatuses. There may be a plurality of methods for determining the scheduling terminal apparatus.

In an example, the third processing unit may obtain, based on the broadcast message, a quantity of feedback signals received by another first terminal apparatus, where a first terminal apparatus that receives the largest quantity of feedback signals is the scheduling terminal apparatus.

In another example, the third processing unit may determine, based on the priority information broadcast by the second terminal apparatus, the first terminal apparatus serving as the scheduling terminal apparatus. For example, the first terminal apparatus may determine, based on priority information in a broadcast message sent by one or more second terminal apparatuses, a first terminal apparatus supported by the largest quantity of second terminal apparatuses. In this case, the terminal apparatus is the scheduling terminal apparatus.

Optionally, the terminal apparatus 700 may further include a fourth processing unit, configured to determine that the first terminal apparatus schedules a specific second terminal apparatus. The scheduling terminal apparatus sends scheduling information to the specific second terminal apparatus, and the specific second terminal apparatus may be a second terminal apparatus that sends the feedback signal to the scheduling terminal apparatus. In other words, the scheduling terminal apparatus schedules a sender (that is, the second terminal apparatus that sends the feedback information) corresponding to the received feedback information.

Optionally, the scheduling terminal apparatus may send the scheduling information to the second terminal device by using a first sidelink resource. The first sidelink resource may belong to a common resource configured by the network apparatus for the first terminal apparatus by using an SIB or radio resource control RRC. Alternatively, the first sidelink resource may belong to a preconfigured common resource, for example, a common resource preconfigured by the network apparatus. The common resource may be a BWP or an RP.

Optionally, the scheduling information sent by the first terminal apparatus may be used to determine a resource of another terminal apparatus during sidelink transmission. The scheduling information sent by the first terminal apparatus to the second terminal apparatus may be configured based on a quality of service (quality of service, QoS) requirement of a service of the second terminal apparatus.

Optionally, the terminal apparatus 700 may further include a fourth receiving unit, configured to receive a NACK/ACK sent by the second terminal apparatus. The NACK/ACK is used to indicate whether the first scheduling information sent by the first terminal apparatus meets a requirement of the second terminal apparatus. The requirement of the second terminal apparatus may be, for example, a sidelink transmission requirement or another service requirement (for example, a QoS requirement) of the second terminal apparatus.

Optionally, after receiving the NACK, the terminal apparatus 700 may send second scheduling information to the second terminal apparatus by using the first sending unit 720. It may be understood that the second scheduling information is different from the first scheduling information.

Optionally, the terminal apparatus 700 may alternatively be the foregoing second terminal apparatus. The terminal apparatus 700 may be configured to implement the foregoing steps performed by the second terminal apparatus.

In addition to the foregoing units, the terminal apparatus 700 may further include a fifth processing unit, configured to determine whether the received first scheduling information meets a requirement of the terminal apparatus 700.

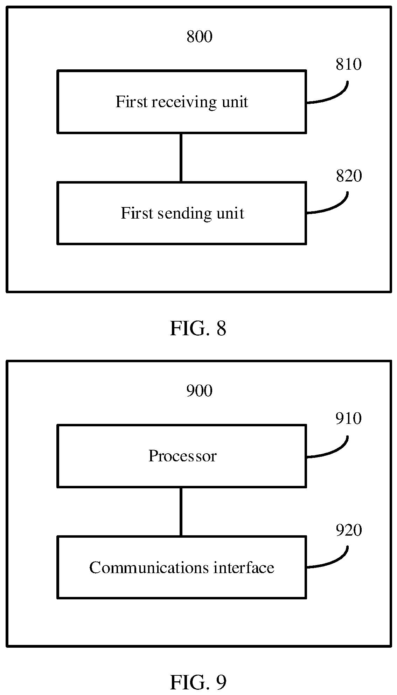

FIG. 8 is a schematic structural diagram of a network apparatus according to an implementation of this application. The network apparatus 800 in FIG. 8 may be the foregoing network apparatus. The network apparatus 800 may be configured to implement the foregoing steps performed by the network apparatus. The network apparatus 800 includes a receiving unit 810 and a sending unit 820.

The first receiving unit 810 is configured to receive application information sent by a first terminal apparatus, where the application information is used to indicate the first terminal apparatus to apply, to the network apparatus, to be a scheduling terminal apparatus of at least one second terminal apparatus.

Optionally, the application message may include information related to the first terminal apparatus. The information related to the first terminal apparatus may be, for example, one or more of a hardware capability (for example, may be one or more of a maximum transmission power, a quantity of antennas, and a maximum supported bandwidth), communications load, a channel condition, and stationarity of the terminal apparatus.

Optionally, the application information may include a quantity of second terminal apparatuses or information related to the second terminal apparatus. The information related to the second terminal may be, for example, a type, a geographical location, and channel quality of the second terminal apparatus.

Optionally, the network apparatus 800 further includes the first sending unit 820, configured to send acknowledgment information to at least one first terminal apparatus, where the acknowledgment information is used by the network apparatus to determine the first terminal apparatus to be the scheduling terminal apparatus. Optionally, the acknowledgment information enables the first terminal apparatus to learn that the first terminal apparatus is a scheduler.

Optionally, the network apparatus 800 may further include a first processing unit, configured to determine one or more first terminal apparatuses to be scheduling terminal apparatuses. There may be a plurality of methods for determining the scheduling terminal apparatus by the first processing unit.

In an example, when a plurality of first terminal apparatuses apply, to the network apparatus, to be scheduling terminal apparatuses, the network apparatus determines whether coverage areas of the plurality of first terminal apparatuses overlap. When the coverage areas of the plurality of first terminal apparatuses overlap, the network apparatus may select a scheduling terminal apparatus based on quantities of second terminal apparatuses in application information sent by the plurality of first terminal apparatuses. For example, the network apparatus may select, to be the scheduling terminal apparatus, a first terminal apparatus that sends application information in which a quantity of second terminal apparatuses is the largest. Alternatively, the network apparatus may compare, in a group of first terminal apparatuses whose coverage areas overlap, quantities of second terminal apparatuses in application information sent by the first terminal apparatuses, and select, in the group to be the scheduling terminal apparatus, a first terminal apparatus that sends application information in which a quantity of second terminal apparatuses is the largest.

In another implementation, when at least one first terminal apparatus applies, to the network apparatus, to be the scheduling terminal apparatus, and a coverage area of the at least one first terminal apparatus does not overlap, the network apparatus may select the at least one first terminal apparatus to be the scheduling terminal apparatus.

FIG. 9 is a schematic structural diagram of a communications apparatus according to an implementation of this application. The communications apparatus 900 in FIG. 9 may be the foregoing communications apparatus. The communications apparatus 900 may be configured to implement the foregoing steps performed by the communications apparatus. The communications apparatus 900 includes a processor 910 and a communications interface 920.

Optionally, the communications interface 920 is configured to perform information interaction between the communications apparatus and another communications apparatus. When program instructions are executed in the at least one processor, the communications apparatus is enabled to implement the functions of the foregoing scheduling method in the first terminal apparatus, the second terminal apparatus, and the network apparatus.

A person of ordinary skill in the art may be aware that units and algorithm steps in the examples described with reference to the implementations disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method implementations. Details are not described herein again.

In the several implementations provided in this application, it should be understood that the disclosed system, apparatus, and method may be implemented in other manners. For example, the described apparatus implementation is merely an example. For example, the assisting selection performed by the network apparatus on the scheduling terminal apparatus is merely an example selection method. In actual implementation, there may be another selection manner. For example, the network apparatus specifies the scheduling terminal apparatus based on stored information of each terminal apparatus.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the implementations.

In addition, function units in the implementations of this application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in the implementations of this application. The storage medium includes any medium that can store program code such as a USB flash drive, a removable hard disk, a read-only memory (read-only memory, ROM), a random access memory (random access memory, RAM), a magnetic disk, or an optical disc.

The scope of protection shall be defined by the appended claims.

## Claims

1. A scheduling method, comprising:
determining (S210), by a first terminal apparatus, to be a scheduling terminal apparatus of at least one second terminal apparatus, wherein the scheduling terminal apparatus schedules the at least one second terminal apparatus; and
sending (S220), by the first terminal apparatus, scheduling information to the at least one second terminal apparatus;
wherein the determining, by a first terminal apparatus, to be a scheduling terminal apparatus of at least one second terminal apparatus comprises:
sending, by the first terminal apparatus, application information to a network apparatus, wherein the application information is used to apply for the first terminal apparatus to be the scheduling terminal apparatus of the at least one second terminal apparatus; and
receiving, by the first terminal apparatus, acknowledgment information of the network apparatus, wherein the acknowledgment information is used to acknowledge the first terminal apparatus to be the scheduling terminal apparatus of the at least one second terminal apparatus;
wherein before the sending, by the first terminal apparatus, application information to a network apparatus, the method further comprises:
sending, by the first terminal apparatus, a pilot signal to another terminal apparatus;
receiving, by the first terminal apparatus, feedback information of the at least one second terminal apparatus for the pilot signal, wherein the at least one second terminal apparatus belongs to the another terminal apparatus; and
determining, by the first terminal apparatus, a quantity of second terminal apparatuses based on the feedback signal;
and
wherein the application information comprises the quantity of second terminal apparatuses.

2. The method according to claim 1, wherein the sending, by the first terminal apparatus, application information to a network apparatus comprises:
sending, by the first terminal apparatus, the application information to the network apparatus when the quantity of second terminal apparatuses is greater than a preset threshold.

3. A scheduling method, comprising:
determining (S210), by a first terminal apparatus, to be a scheduling terminal apparatus of at least one second terminal apparatus, wherein the scheduling terminal apparatus schedules the at least one second terminal apparatus; and
sending (S220), by the first terminal apparatus, scheduling information to the at least one second terminal apparatus;
wherein the determining, by a first terminal apparatus, to be a scheduling terminal apparatus of at least one second terminal apparatus comprises:
sending, by the first terminal apparatus, a pilot signal to another terminal apparatus, wherein the pilot signal is used to indicate that the first terminal apparatus is a candidate terminal apparatus of the scheduling terminal apparatus; and
determining, by the first terminal apparatus based on a quantity of pieces of feedback information, the first terminal apparatus to be the scheduling terminal apparatus of the at least one second terminal apparatus, wherein the feedback information is used to indicate that the first terminal apparatus can schedule the at least one second terminal apparatus;
wherein the first terminal apparatus is one of a plurality of candidate terminal apparatuses of the scheduling terminal apparatus; and the determining, by the first terminal apparatus, to be the scheduling terminal apparatus based on a quantity of pieces of feedback information comprises:
receiving, by the first terminal apparatus, a quantity of pieces of feedback information received by another candidate terminal apparatus in the plurality of candidate terminal apparatuses; and
when the quantity of pieces of feedback information received by the first terminal apparatus is greater than the quantity of pieces of feedback information received by the another candidate terminal apparatus, the first terminal apparatus is the scheduling terminal apparatus.

4. The method according to claim 3, wherein the feedback information comprises priorities of the plurality of candidate terminal apparatuses serving as scheduling terminal apparatuses, and the method further comprises:
determining, by the first terminal apparatus, the first terminal apparatus to be the scheduling terminal apparatus based on a priority that is in the received feedback signal for the pilot signal.

5. The method according to any one of claims 1 to 4, wherein the second terminal apparatus is located out of a coverage area of a network device.

6. A scheduling method, comprising:
receiving, by a network apparatus, application information sent by a first terminal apparatus, wherein the application information is used to apply for the first terminal apparatus to be a scheduling terminal apparatus of at least one second terminal apparatus; and
sending, by the network apparatus, acknowledgment information to the first terminal apparatus, wherein the acknowledgment information is used to acknowledge the first terminal apparatus to be the scheduling terminal apparatus of the at least one second terminal apparatus;
wherein the first terminal apparatus is one of a plurality of candidate terminal apparatuses of the scheduling terminal apparatus, coverage areas of the plurality of candidate terminal apparatuses overlap, and the method further comprises:
determining, by the network apparatus, the scheduling terminal apparatus of the second terminal apparatus in the plurality of candidate terminal apparatuses based on quantities of second terminal apparatuses in application information of the plurality of candidate terminal apparatuses, and
wherein the first terminal apparatus is a terminal apparatus in a coverage area of the network apparatus, and the second terminal apparatus is a terminal apparatus outside the coverage area of the network apparatus.

7. A first terminal apparatus comprising means configured for performing a method according to any one of claims 1 to 5.

8. A network apparatus comprising means configured for performing a method according to claim 6.

## Patentansprüche

1. Planungsverfahren, umfassend:
Bestimmen (S210) durch eine erste Endgerätevorrichtung, eine Planungsendgerätevorrichtung mindestens einer zweiten Endgerätevorrichtung zu sein, wobei die Planungsendgerätevorrichtung die mindestens eine zweite Endgerätevorrichtung plant; und
Senden (S220) von Planungsinformationen durch die erste Endgerätevorrichtung an die mindestens eine zweite Endgerätevorrichtung,
wobei das Bestimmen durch eine erste Endgerätevorrichtung, eine Planungsendgerätevorrichtung mindestens einer zweiten Endgerätevorrichtung zu sein, Folgendes umfasst:
Senden von Antragsinformationen durch die erste Endgerätevorrichtung an eine Netzwerkvorrichtung, wobei die Antragsinformationen dazu verwendet werden, die erste Endgerätevorrichtung als Planungsendgerätevorrichtung mindestens einer zweiten Endgerätevorrichtung zu beantragen; und
Empfangen von Bestätigungsinformationen der Netzwerkvorrichtung durch die erste Endgerätevorrichtung, wobei die Bestätigungsinformationen dazu verwendet werden, die erste Endgerätevorrichtung als Planungsendgerätevorrichtung der mindestens einen zweiten Endgerätevorrichtung zu bestätigen;
wobei vor dem Senden von Antragsinformationen an eine Netzwerkvorrichtung durch die erste Endgerätevorrichtung das Verfahren ferner umfasst:
Senden eines Pilotsignals durch die erste Endgerätevorrichtung an eine andere Endgerätevorrichtung,
Empfangen von Rückmeldungsinformationen der mindestens einen zweiten Endgerätevorrichtung für das Pilotsignal durch die erste Endgerätevorrichtung, wobei die mindestens eine zweite Endgerätevorrichtung zu der anderen Endgerätevorrichtung gehört; und
Bestimmen einer Menge von zweiten Endgerätevorrichtungen durch die erste Endgerätevorrichtung basierend auf dem Rückmeldungssignal;
und
wobei die Antragsinformationen die Menge der zweiten Endgerätevorrichtungen umfassen.

2. Verfahren gemäß Anspruch 1, wobei das Senden von Antragsinformationen durch die erste Endgerätevorrichtung an eine Netzwerkvorrichtung Folgendes umfasst:
Senden der Antragsinformationen durch die erste Endgerätevorrichtung an die Netzwerkvorrichtung, wenn die Menge der zweiten Endgerätevorrichtungen größer als ein vorgegebener Schwellenwert ist.

3. Planungsverfahren, umfassend:
Bestimmen (S210) durch eine erste Endgerätevorrichtung, eine Planungsendgerätevorrichtung mindestens einer zweiten Endgerätevorrichtung zu sein, wobei die Planungsendgerätevorrichtung die mindestens eine zweite Endgerätevorrichtung plant; und
Senden (S220) von Planungsinformationen durch die erste Endgerätevorrichtung an die mindestens eine zweite Endgerätevorrichtung,
wobei das Bestimmen durch eine erste Endgerätevorrichtung, eine Planungsendgerätevorrichtung mindestens einer zweiten Endgerätevorrichtung zu sein, Folgendes umfasst:
Senden eines Pilotsignals durch die erste Endgerätevorrichtung an eine andere Endgerätevorrichtung, wobei das Pilotsignal dazu verwendet wird, anzugeben, dass die erste Endgerätevorrichtung eine Kandidatenendgerätevorrichtung der Planungsendgerätevorrichtung ist; und
Bestimmen durch die erste Endgerätevorrichtung basierend auf einer Menge von Rückmeldungsinformationen, dass die erste Endgerätevorrichtung die Planungsendgerätevorrichtung der mindestens einen zweiten Endgerätevorrichtung ist, wobei die Rückmeldungsinformationen dazu verwendet werden, anzugeben, dass die erste Endgerätevorrichtung die mindestens eine zweite Endgerätevorrichtung planen kann;
wobei die erste Endgerätevorrichtung eine aus einer Vielzahl von Kandidatenendgerätevorrichtungen der Planungsendgerätevorrichtung ist; und das Bestimmen durch die erste Endgerätevorrichtung, basierend auf einer Menge von Rückmeldungsinformationen die Planungsendgerätevorrichtung zu sein, Folgendes umfasst:
Empfangen, durch die erste Endgerätevorrichtung, einer Menge von Rückmeldungsinformationen, die durch eine andere Kandidatenendgerätevorrichtung in der Vielzahl von Kandidatenendgerätevorrichtungen empfangen wurden; und
wenn die Menge der durch die erste Endgerätevorrichtung empfangenen Rückmeldungsinformationen größer als die Menge der durch die andere Kandidatenendgerätevorrichtung empfangenen Rückmeldungsinformationen ist, ist die erste Endgerätevorrichtung die Planungsendgerätevorrichtung.

4. Verfahren gemäß Anspruch 3, wobei die Rückmeldungsinformationen die Prioritäten der Vielzahl von Kandidatenendgerätevorrichtungen umfassen, die als Planungsendgerätevorrichtungen dienen, und das Verfahren ferner Folgendes umfasst: Bestimmen durch die erste Endgerätevorrichtung, dass die erste Endgerätevorrichtung die Planungsendgerätevorrichtung ist, basierend auf einer Priorität, die in dem empfangenen Rückmeldungssignal für das Pilotsignal ist.

5. Verfahren gemäß einem der Ansprüche 1 bis 4, wobei sich die zweite Endgerätevorrichtung außerhalb des Abdeckungsbereichs einer Netzwerkvorrichtung befindet.

6. Planungsverfahren, umfassend:
Empfangen von durch eine erste Endgerätevorrichtung gesendeten Antragsinformationen durch eine Netzwerkvorrichtung, wobei die Antragsinformationen dazu verwendet werden, die erste Endgerätevorrichtung als Planungsendgerätevorrichtung mindestens einer zweiten Endgerätevorrichtung zu beantragen; und
Senden von Bestätigungsinformationen durch die Netzwerkvorrichtung an die erste Endgerätevorrichtung, wobei die Bestätigungsinformationen dazu verwendet werden, die erste Endgerätevorrichtung als die Planungsendgerätevorrichtung der mindestens einen zweiten Endgerätevorrichtung zu bestätigen;
wobei die erste Endgerätevorrichtung eine aus einer Vielzahl von Kandidatenendgerätevorrichtungen der Planungsendgerätevorrichtung ist, sich die Abdeckungsbereiche der Vielzahl von Kandidatenendgerätevorrichtungen überschneiden und das Verfahren ferner umfasst:
Bestimmen der Planungsendgerätevorrichtung der zweiten Endgerätevorrichtung in der Vielzahl von Kandidatenendgerätevorrichtungen durch die Netzwerkvorrichtung basierend auf den Mengen der zweiten Endgerätevorrichtungen in den Antragsinformationen der Vielzahl von Kandidatenendgerätevorrichtungen, und
wobei die erste Endgerätevorrichtung eine Endgerätevorrichtung in einem Abdeckungsbereich der Netzwerkvorrichtung ist und die zweite Endgerätevorrichtung eine Endgerätevorrichtung außerhalb des Abdeckungsbereichs der Netzwerkvorrichtung ist.

7. Erste Endgerätevorrichtung, umfassend Mittel, die zum Durchführen eines Verfahrens gemäß einem der Ansprüche 1 bis 5 konfiguriert sind.

8. Netzwerkvorrichtung, umfassend Mittel, die zum Durchführen eines Verfahrens gemäß Anspruch 6 konfiguriert sind.

## Revendications

1. Procédé de planification, comprenant :
la détermination (S210), par un premier appareil de terminal, qu'il est un appareil de terminal de planification d'au moins un second appareil de terminal, dans lequel l'appareil de terminal de planification planifie l'au moins un second appareil de terminal ; et
l'envoi (S220), par le premier appareil de terminal, d'informations de planification, à l'au moins un second appareil de terminal ;
dans lequel la détermination, par un premier appareil de terminal, qu'il est un appareil de terminal de planification d'au moins un second appareil de terminal comprend :
l'envoi, par le premier appareil de terminal, d'informations de demande, à un appareil de réseau, dans lequel les informations de demande sont utilisées pour demander que le premier appareil de terminal soit l'appareil de terminal de planification de l'au moins un second appareil de terminal ; et
la réception, par le premier appareil de terminal, d'informations de reconnaissance de l'appareil de réseau, dans lequel les informations de reconnaissance sont utilisées pour reconnaître que le premier appareil de terminal est l'appareil de terminal de planification de l'au moins un second appareil de terminal ;
avant l'envoi, par le premier appareil de terminal, d'informations de demande, à un appareil de réseau, le procédé comprenant en outre :
l'envoi, par le premier appareil de terminal, d'un signal pilote, à un autre appareil de terminal ;
la réception, par le premier appareil de terminal, d'informations de retour de l'au moins un second appareil de terminal pour le signal pilote, dans lequel l'au moins un second appareil de terminal appartient à l'autre appareil de terminal ; et
la détermination, par le premier appareil de terminal, d'une quantité de seconds appareils de terminal, sur la base du signal de retour ; et
dans lequel les informations de demande comprennent la quantité de seconds appareils de terminal.

2. Procédé selon la revendication 1, dans lequel l'envoi, par le premier appareil de terminal, d'informations de demande, à un appareil de réseau, comprend :
l'envoi, par le premier appareil de terminal, des informations de demande, à l'appareil de réseau, lorsque la quantité de seconds appareils de terminal est supérieure à un seuil prédéfini.

3. Procédé de planification, comprenant :
la détermination (S210), par un premier appareil de terminal, qu'il est un appareil de terminal de planification d'au moins un second appareil de terminal, dans lequel l'appareil de terminal de planification planifie l'au moins un second appareil de terminal ; et
l'envoi (S220), par le premier appareil de terminal, d'informations de planification, à l'au moins un second appareil de terminal ;
dans lequel la détermination, par un premier appareil de terminal, qu'il est un appareil de terminal de planification d'au moins un second appareil de terminal comprend :
l'envoi, par le premier appareil de terminal, d'un signal pilote, à un autre appareil de terminal, dans lequel le signal pilote est utilisé pour indiquer que le premier appareil de terminal est un appareil de terminal candidat de l'appareil de terminal de planification ; et
la détermination, par le premier appareil de terminal, sur la base d'une quantité d'éléments d'informations de retour, que le premier appareil de terminal est l'appareil de terminal de planification de l'au moins un second appareil de terminal, dans lequel les informations de retour sont utilisées pour indiquer que le premier appareil de terminal peut planifier l'au moins un second appareil de terminal ;
dans lequel le premier appareil de terminal est un d'une pluralité d'appareils de terminal candidats de l'appareil de terminal de planification ; et la détermination, par le premier appareil de terminal, qu'il est l'appareil de terminal de planification, sur la base d'une quantité d'éléments d'informations de retour, comprend :
la réception, par le premier appareil de terminal, d'une quantité d'éléments d'informations de retour reçus par un autre appareil de terminal candidat dans la pluralité d'appareils de terminal candidats ; et
lorsque la quantité d'éléments d'informations de retour reçus par le premier appareil de terminal est supérieure à la quantité d'éléments d'informations de retour reçus par l'autre appareil de terminal candidat, le premier appareil de terminal est l'appareil de terminal de planification.

4. Procédé selon la revendication 3, les informations de retour comprenant des priorités de la pluralité d'appareils de terminal candidats servant d'appareils de terminal de planification, et le procédé comprenant en outre :
la détermination, par le premier appareil de terminal, que le premier appareil de terminal est l'appareil de terminal de planification, sur la base d'une priorité qui est dans le signal de retour reçu pour le signal pilote.

5. Procédé selon l'une quelconque des revendications 1 à 4, dans lequel le second appareil de terminal est situé en dehors d'une zone de couverture d'un dispositif de réseau.

6. Procédé de planification, comprenant :
la réception, par un appareil de réseau, d'informations de demande envoyées par un premier appareil de terminal, dans lequel les informations de demande sont utilisées pour demander que le premier appareil de terminal soit un appareil de terminal de planification d'au moins un second appareil de terminal ; et
l'envoi, par l'appareil de réseau, d'informations de reconnaissance, au premier appareil de terminal, dans lequel les informations de reconnaissance sont utilisées pour reconnaître que le premier appareil de terminal est l'appareil de terminal de planification de l'au moins un second appareil de terminal ;
le premier appareil de terminal étant un d'une pluralité d'appareils de terminal candidats de l'appareil de terminal de planification, des zones de couverture de la pluralité d'appareils de terminal candidats se chevauchant, et le procédé comprenant en outre :
la détermination, par l'appareil de réseau, de l'appareil de terminal de planification du second appareil de terminal dans la pluralité d'appareils de terminal candidats, sur la base de quantités de seconds appareils de terminal dans des informations de demande de la pluralité d'appareils de terminal candidats, et
dans lequel le premier appareil de terminal est un appareil de terminal dans une zone de couverture de l'appareil de réseau, et le second appareil de terminal est un appareil de terminal en dehors de la zone de couverture de l'appareil de réseau.

7. Premier appareil de terminal, comprenant des moyens configurés pour réaliser un procédé selon l'une quelconque des revendications 1 à 5.

8. Appareil de réseau, comprenant des moyens configurés pour réaliser un procédé selon la revendication 6.
